# DEMANDE DE BREVET EUROPEEN

(11) **EP 3 082 333 A1**
(43) Date de publication de la demande: **19.10.2016**
(21) Numéro de dépôt: 16164923.1
(22) Date de dépôt: 12.04.2016
(51) Int. Cl.: H04N 5/64, A47G 1/02, G06F 1/16, F16M 13/02

(54) **STRUCTURE À ÉCRAN MIROIR**

(30) Priorité: 13.04.2015 FR 1553205
(71) Demandeur: Okcu, Buranettin, 67800 Hoenheim (FR)
(72) Inventeur: Okcu, Buranettin, 67800 Hoenheim (FR)
(74) Mandataire: Littolff, Denis

(57) **Abrégé**

L'invention concerne une structure à écran miroir (2) destinée à équiper un téléviseur à écran plat, prévue pour être fixée sur ledit téléviseur de manière ce que l'écran (2) miroir (2) soit positionné devant et parallèlement à l'écran (2) du téléviseur, apte à transmettre les images issues du téléviseur lorsque ce dernier est allumé, et comportant un cadre (1) auquel est fixé l'écran (2) du poste du téléviseur et étant muni de moyens de fixation au téléviseur. Cette structure est caractérisée en ce que :
- les moyens de fixation comportent une pluralité d'organes de fixation (20) réglables individuellement et aptes à exercer une action de pression contre une portion de surface du téléviseur ;
- les organes de fixation (20) sont répartis sur la périphérie du cadre (1) ; et
- chacun des organes de fixation (20) fonctionne avec au moins un autre organe de fixation (20) exerçant sur une autre portion du cadre (1) une action de pression de même direction et de sens opposé ou avec au moins deux organes de fixation (20) exerçant des actions de pression opposées dans deux directions respectivement horizontale et verticale.

## Description

La présente invention a trait à une structure à écran miroir destinée à équiper un téléviseur à écran plat, structure prévue pour être fixée sur ledit téléviseur de manière à ce que l'écran miroir soit positionné devant et parallèlement à l'écran du téléviseur, à proximité immédiate de celui-ci. Une telle structure permet de transmettre les images issues du téléviseur lorsque ce dernier est allumé, et d'être un parfait miroir dans le cas contraire.

Les miroirs associés à des écrans de télévision sont considérés comme des produits de décoration particulièrement raffinés, associés à une idée de luxe dans l'habitat dans la mesure où ces ensembles s'intègrent classiquement dans des lieux véhiculant une image d'architecture intérieure sophistiquée, image qui va souvent de pair avec celle d'une technologie high-tech. L'idée est de masquer l'aspect purement technique nécessaire à la production du son ou de l'image, et de proposer des surfaces lisses en matériaux nobles, par exemple réfléchissants pour bénéficier de l'élégance reconnue aux parois ou fractions de parois en miroir dans les intérieurs. Ces parois réfléchissantes sont alors souvent associées à des parois en matériaux naturels bruts comme de la pierre ou à surface boisée.

A cet égard, les verres et miroirs sont actuellement et de plus en plus considérés comme des matériaux majeurs en matière de design. Les techniques en constante évolution utilisées dans l'élaboration de ces matériaux permettent par ailleurs de tirer parti des technologies les plus récentes dans le domaine de la télévision, de sorte que d'innombrables possibilités d'intégration sont à présent envisageables pour tout type d'architecture d'intérieur.

Actuellement, nombres de solutions consistent à envisager d'emblée, dans la conception architecturale d'un intérieur, des surfaces en miroir, puis à prévoir le cas échéant l'adjonction d'un poste de télévision pour proposer des fonctions informatives, décoratives (photos défilantes) supplémentaires à une paroi réfléchissante au départ conçue comme principalement décorative. Un espace doit, dans ce cas, être dévolu à la télévision, espace ensuite recouvert par la paroi : il faut donc prévoir des niches ou volumes accessibles derrière les parois miroirs.

Dans une même perspective d'aménagement, il est également possible de combiner des surfaces miroirs à des appareils standards du commerce, c'est-à-dire d'adapter des écrans miroirs à des postes de télévision qui restent posés ou fixés dans le volume de la pièce. Il s'agit alors plutôt d'une démarche qui vise à améliorer le design d'un intérieur existant, en instillant une idée de design haut de gamme, de luxe.

C'est la perspective de la présente invention, qui propose une structure permettant une adaptation universelle d'un écran miroir à tout type de télévisions à écran plat du commerce.

La structure à écran miroir de l'invention comporte classiquement un cadre auquel est fixé l'écran miroir, ledit cadre étant prévu pour se fixer sur la périphérie du téléviseur et étant muni de moyens de fixation à ce dernier. Elle se caractérise tout d'abord en ce que :
- les moyens de fixation comportent une pluralité d'organes de fixation réglables individuellement et aptes à exercer une action de pression contre une portion de surface du téléviseur ;
- les organes de fixation sont répartis sur la périphérie du cadre ; et
- chacun des organes de fixation fonctionne avec au moins un autre organe de fixation exerçant sur une autre portion du cadre une action de pression de même direction et de sens opposé ou avec au moins deux organes de fixation exerçant des actions de pression opposées dans deux directions respectivement horizontale et verticale.

La vocation de l'invention est d'être universelle, c'est-à-dire de pouvoir s'adapter facilement à tous les postes de télévision commercialisés, dont les formes extérieures varient considérablement d'une marque à l'autre. Ainsi, dans certains cas, les surfaces auxquelles la structure de l'invention devra se fixer peuvent être planes et perpendiculaires. Dans d'autres configurations, elles seront bombées. Dans d'autres hypothèses encore, une combinaison de surface(s) plane(s) et bombée(s) sera à gérer.

Pour que la fixation soit durable, il faut donc prévoir des organes de fixation qui exercent une action antagoniste à celle d'au moins un autre organe de fixation, au moins un si les actions s'exercent dans la même direction et au moins deux si ce n'est pas le cas, cette hypothèse nécessitant en effet au moins deux organes de fixation exerçant des actions antagonistes dans deux directions correspondant à deux composantes parallèlement auxquelles on décompose l'action exercée par le premier organe de fixation. Le repère est en l'espèce pris dans deux axes respectivement horizontal et vertical.

Selon une possibilité particulièrement avantageuse, notamment pour sa fabrication, le cadre est tubulaire et rectangulaire. De plus, pour des raisons de simplification à la fois mécanique et organisationnelle, les organes de fixation sont de préférence identiques et positionnés au voisinage des coins. L'identité des organes de fixation permet d'utiliser un outil unique pour la fixation de la structure de l'invention à un poste. Le positionnement vers les coins, bien que non indispensable, est préféré car il permet de mieux gérer les surfaces courbes dans la mesure où les actions exercées en biais, donc comprenant deux composantes parallèles à deux côtés adjacents du cadre rectangulaire, sont plus aisément rattrapées par un organe de fixation situé dans un coin opposé du cadre.

Du fait de la configuration des organes de fixation, qui sera détaillée dans la suite, ce cadre, bien que rectangulaire, peut parfaitement être fixé à des profils incurvés, comprenant par exemple des surfaces bombées, de postes de télévision.

Selon une possibilité, les organes de fixation sont des vérins fixés dans un premier tube du cadre et dont une partie est mobile en translation parallèlement à un second tube perpendiculaire audit premier tube.

En pratique, chaque organe de fixation comporte un premier élément dont la position est réglable en translation par rapport au tube du cadre auquel il est attaché, et un second élément de contact avec le téléviseur mobile relié au premier élément par une liaison à trois degrés de liberté en rotation.

Plus précisément, chaque organe de fixation comporte une tige filetée coopérant avec un orifice traversant un tube du cadre muni d'un filetage interne, dont l'extrémité libre est munie de moyens de vissage/dévissage de l'organe, l'autre extrémité étant munie d'un plot articulé à la tige filetée par une liaison à rotule.

C'est ce plot à trois degrés de liberté qui permet de fixer le cadre de manière universelle, dans la mesure où il peut s'adapter à des orientations diverses des surfaces extérieures des postes de télévision.

Le plot peut comporter une base plane et est de préférence recouvert d'un capuchon en plastique souple. Idéalement, dans l'analyse mécanique de la liaison, le contact est ponctuel : en pratique, le plot propose une surface plane de contact qui peut s'orienter librement en fonction du profilé sur lequel il s'appuie, du fait des trois degrés de liberté en rotation qu'il possède. Le capuchon plastique améliore la souplesse de contact et augmente l'adaptabilité du plot à tout type de surface du poste. Une couche en matériau souple de type caoutchouc peut encore être ajoutée sur la surface de contact, renforçant la souplesse d'adaptation.

Selon une configuration possible, le filetage interne est en réalité pratiqué dans un écrou formant un insert placé dans ledit orifice traversant d'un tube. Cette possibilité est prévue pour le cas, fréquent, où le cadre tubulaire est réalisé au moyen de tubes creux : l'orifice traversant est dès lors constitué par deux trous coaxiaux, et il n'est nullement possible d'y fabriquer directement un filetage.

Le cadre est de préférence constitué de tubes de section rectangulaire solidarisés les uns aux autres aux moyens de coins d'assemblage comportant un élément central parallélépipédique de même section que les tubes dans le prolongement de ses branches perpendiculaires, dont les dimensions sont aptes à s'ajuster serrées à l'intérieur de deux tubes adjacents du cadre.

Cette configuration permet un montage aisé du cadre, au surplus fabriqué à l'aide de simples tubes rectilignes facilement extrudables puis sectionnés à la longueur correcte. Fabrication et montage sont donc optimisés, en termes de temps et de coût.

En fait, de manière avantageuse, les organes de fixation sont au nombre de huit, disposés deux à deux symétriquement à la médiatrice de chaque coin du cadre.

Ils peuvent bien entendu être simplement disposés symétriquement deux à deux par rapport à un plan vertical ou à un plan horizontal médian du cadre. De préférence, ils sont cependant disposés symétriquement deux à deux par rapport à un plan vertical et à un plan horizontal médians du cadre.

Ces caractéristiques dessinent un cadre fonctionnel au profil très généraliste, facile à fabriquer et à assembler, constitué d'un rectangle tubulaire dont les coins sont équipés d'organes de fixation qui sont placés équidistants desdits coins et symétriquement deux à deux, la moitié d'entre eux par rapport à l'horizontale et l'autre moitié par rapport à la verticale.

Ce cadre est ensuite fixé à l'écran miroir, de préférence par collage à l'aide d'une colle spéciale particulièrement résistante. Le cadre n'est pas nécessairement centré dans l'écran miroir, lequel n'est d'ailleurs pas rectangulaire dans tous les cas, mais les tubes qui le constituent sont évidemment fixés relativement proches des bords libres de l'écran miroir. L'ensemble forme la structure de l'invention, adaptable à tout type de poste de télévision du commerce.

L'invention va à présent être décrite plus en détail, en référence aux figures annexées, qui en montrent une configuration possible, et pour lesquelles :
- la figure 1 représente en vue perspective une structure écran miroir adaptable à un poste de télévision selon l'invention ;
- la figure 2 montre une vue de côté de la même structure ;
- les figures 3a et 3b montrent une configuration possible d'organe de fixation, respectivement en vue en élévation et en vue perspective ;
- les figures 4a et 4b représentent un insert fileté, respectivement en vue perspective et en vue en élévation ; et
- la figure 5 illustre le montage du cadre sur l'écran miroir.

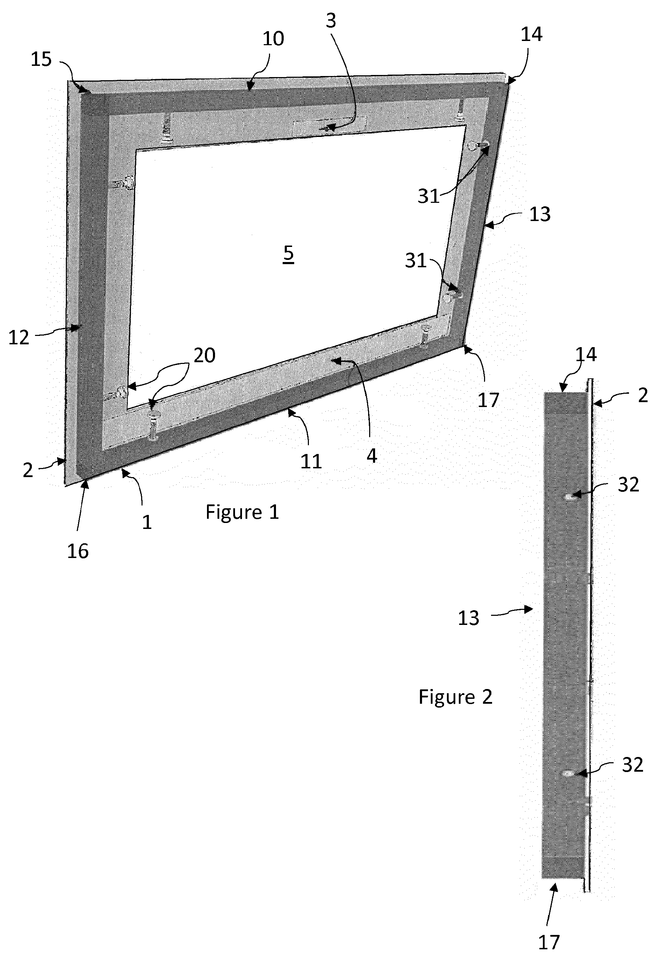

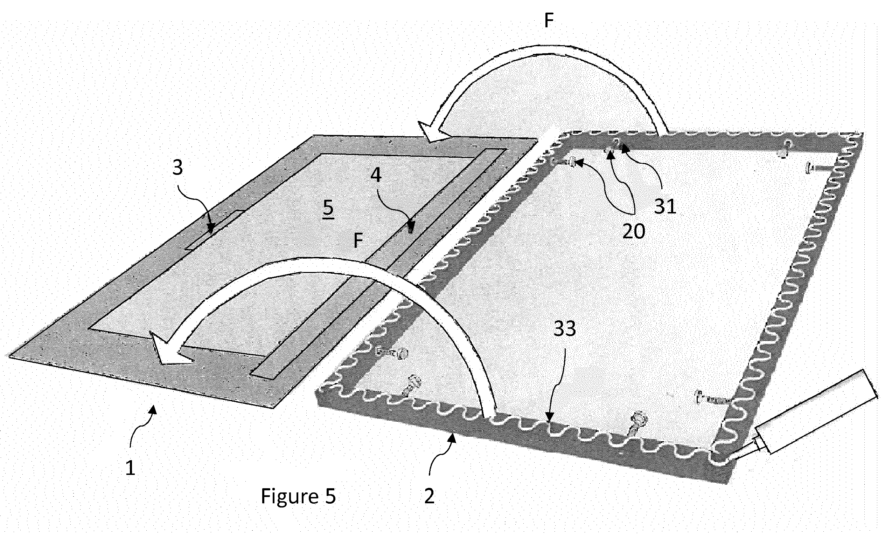

En référence à la figure 1, la structure à écran miroir de l'invention comporte très généralement un cadre (1) fixé à un écran miroir (2), par exemple par collage comme illustré en figure 5. Le cadre (1) est, dans cette hypothèse, rectangulaire de même que l'écran miroir (2), et il est positionné de manière sensiblement centrée par rapport à l'écran (2). Ce dernier, fabriqué de préférence en verre feuilleté sécurisé, comporte une fenêtre (3) prévue pour se positionner devant un capteur infrarouge et une caméra de l'écran du poste de télévision. Une autre fenêtre (4) disposée en position basse permet l'accès radiocommandé aux capteurs infrarouges de commande du téléviseur. La partie centrale (5) de l'écran (2) est dévolue à la transmission des images provenant dudit poste de télévision.

Le cadre (1) est constitué en l'occurrence de quatre tubes (10, 11, 12, 13) à section rectangulaire reliés par des coins en L (14, 15, 16, 17). Ces derniers sont par exemple constitués en plastique de type ABS, présentant le cas échéant un renfort en acier à l'intérieur.

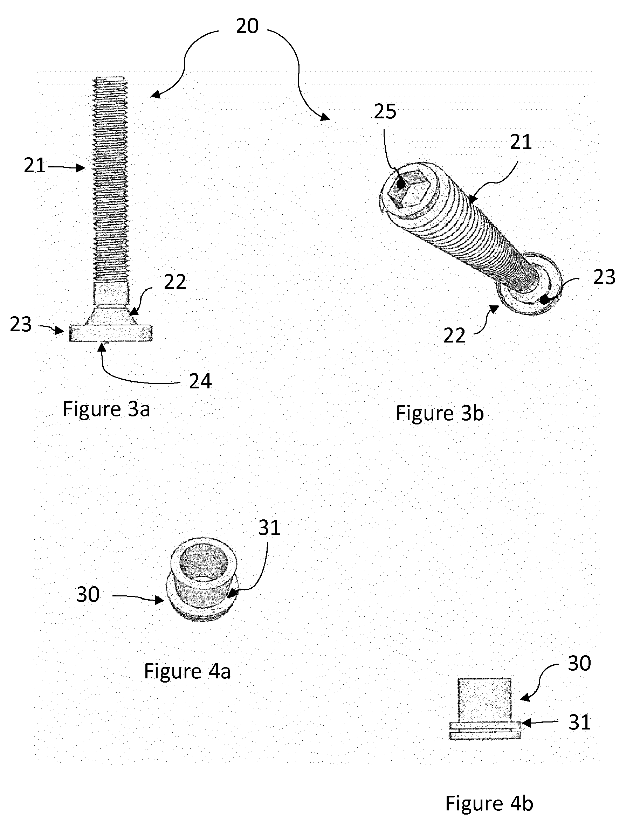

Des organes de fixation sous forme de vérins (20) sont disposés au voisinage des angles du cadre, un vérin (20) de part et d'autre de chaque coin (14, 15, 16, 17). Ces organes de fixation (20), apparaissant en figures 3a et 3b, sont constitués d'une tige filetée (21) articulée via une liaison à rotule à un plot (22) doté d'un disque (23) dont la face plane libre (24) est prévue pour se positionner sur une surface du poste de télévision. L'extrémité libre de la tige filetée (21) présente un évidement (25) à six pans, en l'occurrence prévu pour une clé Allen de serrage/desserrage des vérins (20). Cette clé permet la commande de la position du vérin (20), et par conséquent du serrage de la structure de l'invention par rapport à un poste de télévision.

Les disques (23) sont prévus en acier, recouverts d'un capuchon en plastique, la base plane (24) étant de préférence au surplus équipée d'une couche de matériau souple de type caoutchouc. Les tiges filetées (21) sont vissées dans des inserts (30) apparaissant en figures 4a et 4b. Ces inserts (30) présentent un filetage intérieur correspondant au filetage externe des tiges filetées (21). Une collerette (31) aide au positionnement des inserts dans les orifices (32) prévus à cet effet dans les tubes (10, 11, 12, 13) du cadre (1), collerette (31) fonctionnant en butée sur la surface de ces tubes (10, 11, 12, 13) interne audit cadre (1). Lesdites collerettes (31) sont apparentes en figures 1 et 5.

Ces inserts (30) sont insérés dans des orifices (32) des tubes (10, 11, 12, 13), apparaissant notamment en figure 2, et sont nécessaires du fait que les tubes (10, 11, 12, 13) sont creux, et par conséquent inadéquats en tant que tels pour une liaison vissée telle que celle qui est mise en oeuvre via les vérins (20). Les tubes (10, 11, 12, 13) ne comportent en soi que deux trous en regard, et nécessitent en effet d'être équipés pour permettre le vissage/dévissage des vérins (20) : l'insert (30) est prévu à cet effet, et fiché dans le trou orienté vers l'intérieur du cadre (1) pour que le vérin (20) soit correctement placé pour accomplir sa fonction.

La figure 5 montre schématiquement un mode de fixation du cadre (1) sur l'écran miroir (2), en l'espèce par collage. De la colle (33) est uniformément répartie sur la périphérie du cadre (1), sur sa face prévue pour venir au contact de l'écran (2), avant application en pression du cadre (1) sur l'écran (2) pendant une certaine durée correspondant au temps de prise de la matière adhésive.

Lorsque la structure de l'invention est assemblée et prête à l'emploi, l'utilisateur place l'écran miroir (2) devant l'écran du poste de télévision (non représenté), le cadre (1) étant dès lors positionné autour de la partie avant dudit poste. Un serrage des différents vérins (20) est mis en oeuvre, permettant d'abord une simple mise en contact de la base plane (24) des disques (23) sur la périphérie du boîtier du poste de télévision, puis un serrage progressif périphérique, c'est-à-dire en agissant successivement et périphériquement sur l'ensemble des vérins (20). Lorsque le poste comporte des surfaces bombées, les disques (23) s'adaptent naturellement à la configuration, du fait des trois degrés de liberté permis par la liaison à rotule.

L'invention ne se limite bien entendu pas à la configuration décrite et expliquée en référence aux figures, mais elle englobe les variantes et versions qui entrent dans la portée des revendications.

## Revendications

1. Structure à écran miroir (2) destinée à équiper un téléviseur à écran plat, prévue pour être fixée sur ledit téléviseur de manière ce que l'écran (2) miroir (2) soit positionné devant et parallèlement à l'écran (2) du téléviseur, apte à transmettre les images issues du téléviseur lorsque ce dernier est allumé, et comportant un cadre (1) auquel est fixé l'écran (2) du poste du téléviseur et étant muni de moyens de fixation au téléviseur, **caractérisée en ce que** :
- les moyens de fixation comportent une pluralité d'organes de fixation (20) réglables individuellement et aptes à exercer une action de pression contre une portion de surface du téléviseur ;
- les organes de fixation (20) sont répartis sur la périphérie du cadre (1) ; et
- chacun des organes de fixation (20) fonctionne avec au moins un autre organe de fixation (20) exerçant sur une autre portion du cadre (1) une action de pression de même direction et de sens opposé ou avec au moins deux organes de fixation (20) exerçant des actions de pression opposées dans deux directions respectivement horizontale et verticale.

2. Structure à écran miroir (2) destinée à équiper un téléviseur selon la revendication précédente, **caractérisée en ce que** le cadre (1) est tubulaire et rectangulaire.

3. Structure à écran miroir (2) destinée à équiper un téléviseur selon la revendication précédente, **caractérisée en ce que** les organes de fixation (20) sont identiques et positionnés au voisinage des coins (14, 15, 16, 17).

4. Structure à écran miroir (2) destinée à équiper un téléviseur selon la revendication précédente, **caractérisée en ce que** les organes de fixation (20) sont des vérins fixés dans un premier tube (10) du cadre (1) et dont une partie est mobile en translation parallèlement à un second tube (12) perpendiculaire au premier tube (10).

5. Structure à écran miroir (2) destinée à équiper un téléviseur selon la revendication précédente, **caractérisée en ce que** chaque organe de fixation (20) comporte un premier élément dont la position est réglable en translation par rapport au tube (10, 11, 12, 13) du cadre (1) auquel il est attaché, et un second élément de contact avec le téléviseur mobile relié au premier élément par une liaison à trois degrés de liberté en rotation.

6. Structure à écran miroir (2) destinée à équiper un téléviseur selon la revendication précédente, **caractérisée en ce que** chaque organe de fixation (20) comporte une tige filetée (21) coopérant avec un orifice (32) traversant un tube (10, 11, 12, 13) du cadre (1) muni d'un filetage interne, dont l'extrémité libre est munie de moyens de vissage/dévissage de l'organe, l'autre extrémité étant munie d'un plot (22) articulé à la tige filetée (21) par une liaison à rotule.

7. Structure à écran miroir (2) destinée à équiper un téléviseur selon la revendication précédente, **caractérisée en ce que** le plot (22) comporte une base plane (24) et est recouvert d'un capuchon en plastique souple.

8. Structure à écran miroir (2) destinée à équiper un téléviseur selon l'une des revendications 6 et 7, **caractérisée en ce que** le filetage interne est pratiqué dans un écrou formant un insert (30) placé dans ledit orifice (32) traversant d'un tube (10, 11, 12, 13).

9. Structure à écran miroir (2) destinée à équiper un téléviseur selon l'une des revendications 2 à 8, **caractérisée en ce que** le cadre (1) est constitué de tubes (10, 11, 12, 13) de section rectangulaire solidarisés les uns aux autres aux moyens de coins (14, 15, 16, 17) d'assemblage comportant un élément central parallélépipédique de même section que les tubes (10, 11, 12, 13) dans le prolongement de ses branches perpendiculaires, dont les dimensions sont aptes à s'ajuster serrées à l'intérieur de deux tubes (10, 11, 12, 13) adjacents du cadre (1).

10. Structure à écran miroir (2) destinée à équiper un téléviseur selon l'une des revendications 2 à 9, **caractérisée en ce que** les organes de fixation (20) sont au nombre de huit, disposés deux à deux symétriquement à la médiatrice de chaque coin du cadre (1).

11. Structure à écran miroir (2) destinée à équiper un téléviseur selon l'une quelconque des revendications précédentes, **caractérisée en ce que** le cadre (1) est fixé à l'écran miroir (2) par collage (33).
